# EUROPÄISCHE PATENTSCHRIFT

(11) **EP 0 974 862 B1**
(45) Veröffentlichungstag und Bekanntmachung des Hinweises auf die Patenterteilung: **17.10.2001**
(21) Anmeldenummer: 98113118.8
(22) Anmeldetag: 15.07.1998
(51) Int. Cl.: G03B 5/06, G03B 5/08, G03B 19/10, G02B 7/00

(54) **Anordnung zum Schwenken eines optischen Gerätes, Träger mit einer solchen Anordnung für eine Kamera, und Fachkamera mit einem solchen Träger**
Apparatus for swinging an optical device, carrier with such an apparatus for a camera, and large format camera with such a carrier
Appareil de basculement d'un dispositif optique, porte-objet muni d'un tel appareil pour appareil photographique, et appareil photographique de grand format muni d'un tel porte-objet

(43) Veröffentlichungstag der Anmeldung: 26.01.2000
(73) Patentinhaber: Vogt, Philippe, CH-8038 Zürich (CH)
(72) Erfinder: Vogt, Philippe, CH-8038 Zürich (CH)
(74) Vertreter: Heubeck, Bernhard

(56) Entgegenhaltungen:
- DE-B- 1 772 918
- US-A- 4 814 803

## Beschreibung

Die Erfindung betrifft eine Anordnung zum Schwenken eines optischen Gerätes gemäss dem Oberbegriff des Anspruches 1. Die Erfindung betrifft ferner einen Träger für eine Kamera mit einer solchen Anordnung sowie eine Fachkamera mit einem solchen Träger.

In der DE-17 72 918 ist eine Fachkamera mit einem Bildrahmen und einem Objektivrahmen beschrieben, die um eine horizontale und eine vertikale Achse geschwenkt werden können. Hierzu enthält die Fachkamera eine Anordnung, die im Wesentlichen aus einen Support, einem Segment und einem Querschlitten besteht. An den Rahmen ist jeweils der Support befestigt, welcher die vertikale Schwenkachse bestimmt. Der Support ist im Segment mit Hilfe eines Drehlagers mit Kugeln gelagert und ist auf einem Querschlitten bewegbar abgestützt, der in einem Schwenkglied verschiebbar gelagert und mittels einer Klemmvorrichtung arretiert werden kann. Im Querschlitten sind Laufbahnen für Kugeln vorgesehen, die längs Kreisbogen konzentrisch um die horizontale Schwenkachse verlaufen. Die Kugeln wälzen sich auf diesen Laufbahnen ab, so dass möglichst geringe Reibungskräfte zu überwinden sind. Zur Schwenkung des Bildrahmens um die horizontale Schwenkachse ist ein Mechanismus vorgesehen.

Anstelle der Kugeln können Gleitlager aus reibungsarmen Material vorgesehen werden.

Der Nachteil dieser Anordnung ist im Wesentlichen darin zu sehen, dass ein Mechanismus zur Schwenkung um die Achse und/oder eine Einrichtung zum Festlegen der Stellung vorgesehen ist.

Der Erfindung liegt die Aufgabe zugrunde eine Anordnung zum Schwenken eines optischen Gerätes zu verbessern.

Diese Aufgabe wird erfindungsgemäss mit den kennzeichnenden Merkmalen des Anspruches 1 gelöst.

Die mit der Erfindung erreichbaren Vorteile sind darin zu sehen, dass die Anordnung einfach aufgebaut, der Raumbedarf gering und wartungsfrei ist und keine Feststelleinrichtung benötigt.

Ein Träger für einen um eine horizontale und vertikale Achse schwenkbaren Objektivrahmen oder Bildrahmen mit einer Anordnung ist erfindungsgemäss durch die Merkmale des Anspruches 5 gekennzeichnet.

Dieser Träger hat die Vorteile, dass die Anordnung, welche die horizontale Schwenkachse bestimmt oberhalb der Einrichtung angeordnet ist, welche die vertikale Schwenkachse bestimmt, so dass der Objektivrahmen bzw. der Bildrahmen bei der Schwenkung um die beiden Achse keinerlei Torkelbewegung ausführt und dass durch den Wegfall des Mechanismus zur Schwenkung die Bauhöhe und das Gewicht verringert wird.

Nachfolgend werden Ausführungen der Erfindung anhand der beiliegenden Zeichnungen erläutert.

Es zeigen:
- Fig.1: Eine Ansicht einer Ausführung einer erfindungsgemässen Anordnung in auseinander gezogener Darstellung;
- Fig.2: einen Schnitt entlang der Linie II-II in Fig.1;
- Fig.3: eine Ansicht in Richtung des Pfeiles A in Fig.1;
- Fig.4: einen Schnitt entlang der Linie IV-IV in Fig.1 und
- Fig.5: eine Ausführung eines erfindungsgemässen Trägers mit einem Bildrahmen;
- Fig.6: eine andere Ausführung eines erfindungsgemässen Träger und
- Fig.7: eine Ansicht in Richtung des Pfeiles A in Fig.6.

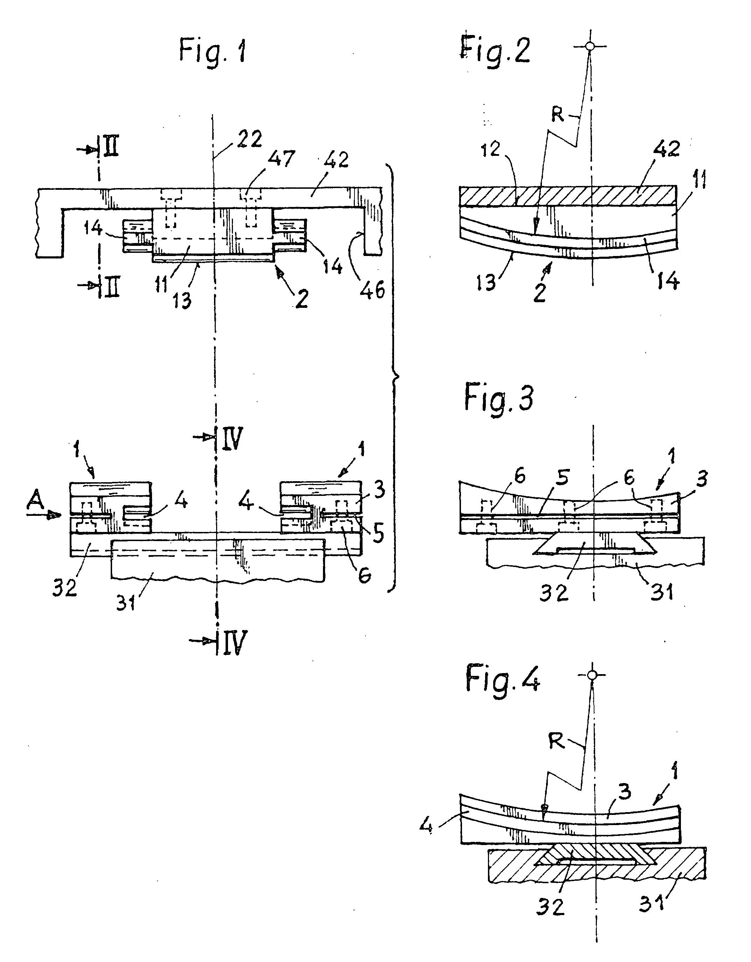

Es wird auf die Figuren 1 bis 4 Bezug genommen. Die hier in Rede stehende Anordnung besteht im Wesentlichen aus zwei Führungseinheiten 1, einem Schwenkteil 2 und drei Stellschrauben 6.

Jede Führungseinheit 1 hat einen länglichen Körper 3 mit einer ebenen Fläche zum Befestigen desselben und einer bogenförmigen Fläche. Der Körper 3 ist an einer Längsseite mit einer als Kreisbogen mit einem Radius R ausgebildeten Nut 4, die zwei zur Schwenkachse konzentrisch Lagerflächen bilden und an der anderen Längsseite mit einem geraden Schlitz 5 versehen. Die Stellschrauben 6 sind im Bereich des Schlitzes 5 und quer zu diesen in den Körper 3 eingeschraubt.

Der Schwenkteil 2 weist einen länglichen Mittelteil 11 mit einer ebenen Fläche 12 zum Befestigen desselben und mit einer bogenförmigen Fläche 13 sowie zwei als Kreisbogen mit dem Radius R ausgebildete Gleitabschnitte 14 auf, die zwei zur Schwenkachse konzentrisch Lagerflächen bilden und an den Längsseiten abstehen.

Die Führungseinheiten 1 sind im Abstand zueinander an einem Tragteil 31 angeordnet und der Schwenkteil 2 ist zwischen den Führungseinheiten so angeordnet, dass die Gleitabschnitte 14 in die Nuten 4 eingreifen. Mittels der Stellschrauben 6 ist die Weite der Nuten 4 so einstellbar, dass das Spiel zwischen den konzentrischen Lagerflächen der Nut 4 und des Gleitabschnittes 14 aufgehoben und eine selbsthemmende Schwenkbewegung erzielt wird.

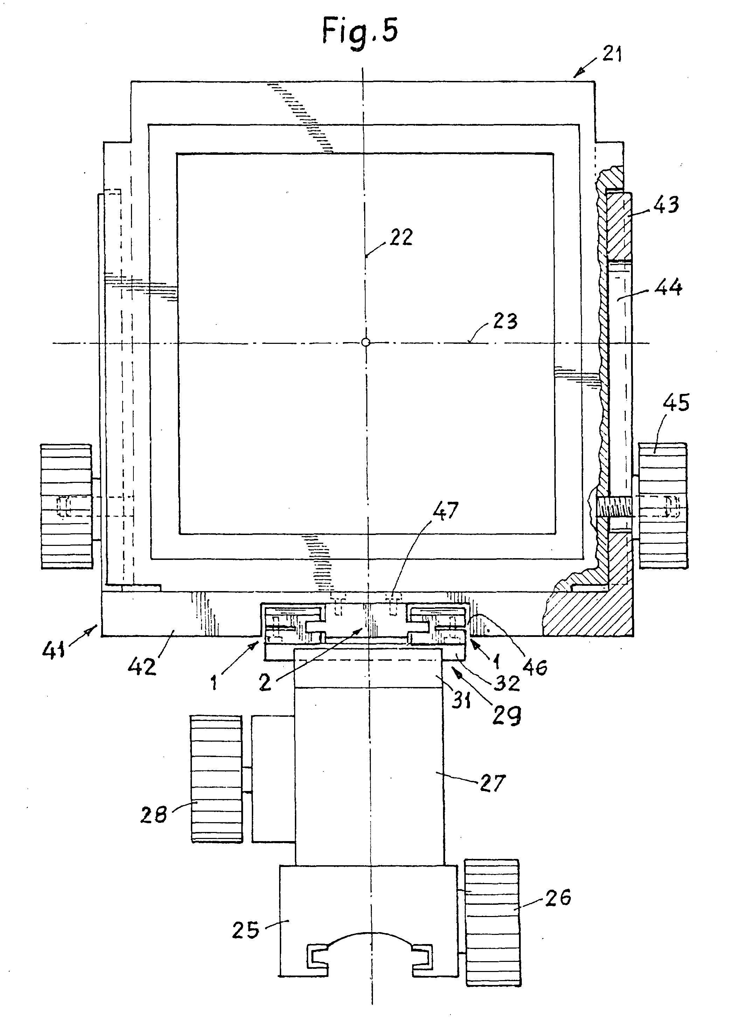

Die Fig.5 zeigt einen Träger mit einem Bildrahmen 21, der um eine vertikale Achse 22 und um eine horizontale Achse 23 schwenkbar ist und mit der vorstehend beschriebenen Anordnung.

Der Träger enthält ausgehend von einer nicht dargestellten Kamerabasis einen Schiebekopf 25 mit einer Feststelleinrichtung 26, um den Bildrahmen auf Kamerabasis verschieben bzw. festzulegen, eine Einrichtung 27 mit einer Feststelleinrichtung 28, welche die vertikale Schwenkachse 22 bestimmt und welche auf dem Schiebekopf 25 befestigt ist, eine Führung 29, welche auf der die vertikale Schwenkachse bestimmende Einrichtung 27 lösbar angeordnet ist und die hier in Rede stehende Anordnung, welche die horizontale Schwenkachse 23 bestimmt und welche in der Führung 29 parallel zur horizontalen Achse 23 verschiebbar angeordnet ist.

Die Führung ist eine Schwalbenschwanzführung mit einem ortsfesten Führungsteil 31, der an der Einrichtung 27 befestigt ist und mit einem beweglichen Führungsteil 32, der als Träger für die Anordnung ausgebildet ist und an welchem die Führungseinheiten 1 befestigt sind.

Der Bildrahmen 21 ist in einem gabelförmigen Halter 41 mit einem Basisabschnitt 42 und zwei Schenkeln 43 verschiebbar angeordnet. In den Schenkeln 43 sind Langlöcher 44 ausgebildet. Es sind Feststellmittel 45 vorgesehen, welche die Langlöcher durchgreifen, um den Bildrahmen 21 am Halter 41 festzulegen. Im Basisabschnitt 32 ist eine Auskehlung 46 zur Aufnahme der Anordnung ausgebildet. Die Anordnung ist über den Schwenkteil 2 mittels Schrauben 47 am Halter 41 befestigt.

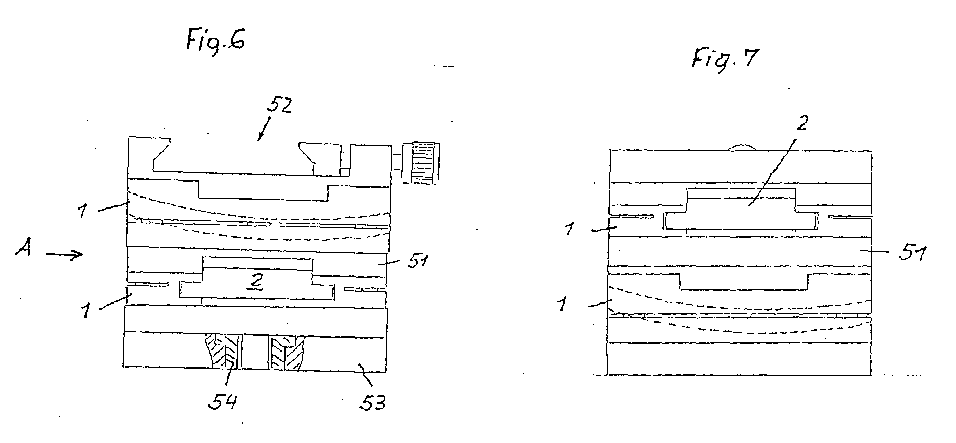

Bei dem in den Figuren 6 und 7 dargestellten Träger sind zwei Anordnungen vorgesehen, die aufeinander liegend so montiert sind, dass die Schwenkachsen sich rechtwinklig kreuzen. Zwischen den Anordnungen sind Verbindungsorgane 51 vorgesehen, die mit den Führungseinheiten 1 mittels nicht dargestellten Schrauben verbunden sind. Zum Halten eines optischen Gerätes ist eine entsprechende Einrichtung 52 vorgesehen. Zur Befestigung des Trägers an einem Stativ ist ein Basisteil 53 mit einer Gewindebuchse 54 vorgesehen. Es wird darauf hingewiesen, dass mit dieser Ausführung die Schwenkachsen unter beliebigen Winkeln vorgesehen werden können.

Die Anordnung umfasst Führungseinheiten 1 mit einer bogenförmigen Nut 4, einen Schwenkteil 2 mit bogenförmigen Gleitkufen 14 und Mittel 6 zum Einstellen der Weite der Nut. Dadurch kann in vorteilhafter Weise eine selbshemmende Schwenkung mit einfachen Mitteln erzielt werden.

Ein Träger für einen Objektiv- oder einen Bildrahmen mit dieser Anordnung hat die Vorteile des Wegfalls einer Einstelleinrichtung für die horizontale Schwenkung und der damit verbundenen Einsparung an Gewicht und Höhe bei einer Fachkamera sowie einer torkelfreien Schwenkung des Objektiv- und Bildrahmens.

## Patentansprüche

1. Anordnung zum Schwenken eines optischen Gerätes um eine Achse, welche Anordnung eine Führungseinheit (1) mit einer bogenförmigen Nut (4) und einen Schwenkteil (2) mit einem bogenförmigen Gleitabschnitt (14) aufweist, der entlang der Nut bezüglich der Führungseinheit verschiebbar ist, **gekennzeichnet durch** Mittel (6) zum Einstellen der Weite der Nut (4), um eine selbsthemmende Schwenkung zu erzielen.

2. Anordnung nach Anspruch 1, weiter **dadurch gekennzeichnet, dass** die Führungseinheit (1) einen länglichen Körper aufweist, der an einer Längsseite mit der Nut (4) und an der anderen Längsseite mit einem Schlitz (5) versehen ist und dass das Mittel (6) mindestens eine Stellschraube umfasst, die den Schlitz durchdringt, um durch Änderung der Weite des Schlitzes (5) die Weite der Nut (4) einzustellen.

3. Anordnung nach Anspruch 1 oder 2, weiter **dadurch gekennzeichnet, dass** zwei Führungseinheiten (1) vorgesehen sind, die im Abstand zueinander auf einen Tragteil (31) befestigt sind und dass der Schwenkteil (2) als länglicher Körper mit zwei Gleitabschnitten (14) ausgebildet ist, die an den gegenüberliegenden Seiten des Körpers abstehen und mit den Nuten (4) der Führungseinheiten (1) in Eingriff sind.

4. Träger für ein optisches Gerät mit zwei Anordnungen nach einem der Ansprüche 1 bis 3, weiter **dadurch gekennzeichnet, dass** die Anordnungen so angeordnet sind, dass sich die Schwenkachse kreuzen.

5. Träger für einen Objektivrahmen einer Kamera oder einen Bildrahmen einer Kamera, mit einem Halter (41) für den Objektivrahmen bzw. den Bildrahmen, mit einer Einrichtung (27), um den Objektivrahmen oder den Bildrahmen (21) jeweils um eine vertikale Achse (22) zu schwenken und mit einer Anordnung nach einem der Ansprüche 1 bis 3, weiter **dadurch gekennzeichnet, dass** die Anordnung oberhalb der Einrichtung (27) für die vertikale Schwenkachse angeordnet ist, um den Objektivrahmen bzw. Bildrahmen jeweils um eine horizontale Achse (23) zu schwenken.

6. Träger nach Anspruch 5, weiter **dadurch gekennzeichnet, dass** die Anordnung für die horizontale Schwenkachse (23) mindestens teilweise im Halter (41) für den Objektivrahmen bzw. den Bildrahmen angeordnet ist.

7. Träger nach Anspruch 5, weiter **dadurch gekennzeichnet, dass** der Halter (41) mit einem Basisteil (42) und zwei Schenkeln (43) zur verstellbaren Aufnahme des Objektivrahmens bzw. des Bildrahmens und mit Mitteln (45) zum Festlegen des Objektivrahmens bzw. des Bildrahmens versehen ist.

8. Träger nach Anspruch 5, weiter **dadurch gekennzeichnet, dass** der Halter (41) eine Aussparung (46) aufweist, deren Mittellinie die vertikale Achse (22) schneidet und quer zur horizontalen Achse (22) verläuft und dass die Führungseinheit (1) oder der Schwenkteil (2) in der Aussparung angeordnet sind.

9. Fachkamera mit einem Träger nach einem der Ansprüche 5 bis 8.

## Claims

1. Arrangement for the pivoting of an optical apparatus about an axis, said arrangement having a guide unit (1) with an arcuate groove (4) and a pivotable part (2) having an arcuate slide section (14) which is displaceable along the groove relative to the guide unit, **characterised by** means (6) for the adjustment of the width of the groove (4) in order to achieve a self-locking pivoting.

2. Arrangement in accordance with claim 1, further **characterised in that** the guide unit (1) has an elongate body which is provided with the groove (4) at one longitudinal side and is provided with a slot (5) at the other longitudinal side and **in that** the means (6) includes at least one adjustment screw which passes through the slot in order to set the width of the groove (4) by changing the width of the slot (5).

3. Arrangement in accordance with claim 1 or claim 2, further **characterised in that** two guide units (1) are provided which are secured at a spacing from one another on a carrier part (31) and **in that** the pivotable part (2) is formed as an elongate body with two slide sections (14) which project at opposite sides of the body and are in engagement with the grooves (4) of the guide units (1).

4. Carrier for an optical apparatus having two arrangements in accordance with one of the claims 1 to 3, further **characterised in that** the arrangements are arranged such that the pivot axes cross.

5. Carrier for an objective frame of a camera or an image frame of a camera, comprising a holder (41) for the objective frame or the image frame, comprising a means (27) in order to pivot the objective frame or image frame respectively about a vertical axis (22) and comprising an arrangement in accordance with one of the claims 1 to 3, further **characterised in that** the arrangement is arranged above the means (27) for the vertical pivot axis in order to pivot the objective frame or image frame respectively about a horizontal axis (23).

6. Carrier in accordance with claim 5, further **characterised in that** the arrangement for the horizontal pivot axis (23) is arranged at least partly in the holder (41) for the objective frame or the image frame.

7. Carrier in accordance with claim 5, further **characterised in that** the holder (41) is provided with a base section (42) and two limbs (43) for the adjustable reception of the objective frame or the image frame and with means (45) for the fixation of the objective frame or the image frame.

8. Carrier in accordance with claim 5, further **characterised in that** the holder (41) has a recess (46), the centre line of which intersects the vertical axis (22) and extends transversely to the horizontal axis (22) and **in that** the guide unit (1) or the pivotable part (2) are arranged in the recess.

9. Plate or technical camera having a carrier in accordance with one of the claims 5 to 8.

## Revendications

1. Dispositif pour faire pivoter un appareil optique autour d'un axe, qui comprend une unité de guidage (1) avec une rainure en arc de cercle (4) et un élément pivotant (2) avec un segment de glissement en arc de cercle (14) pouvant être déplacé par rapport à l'unité de guidage le long de la rainure, **caractérisé par** des moyens (6) pour régler la largeur de la rainure (4) afin d'obtenir un pivotement autobloquant.

2. Dispositif selon la revendication 1, également **caractérisé en ce que** l'unité de guidage (1) présente un corps allongé qui est muni sur un côté longitudinal de la rainure (4) et sur l'autre côté longitudinal d'une fente (5), et **en ce que** le moyen (6) comprend au moins une vis de réglage traversant la fente, afin de régler la profondeur de la rainure (4) en modifiant la largeur de la fente (5).

3. Dispositif selon la revendication 1 ou 2, également **caractérisé en ce que** deux unités de guidage (1) sont prévues, qui sont fixées de façon espacée sur un support (31), et **en ce que** l'élément pivotant (2) est réalisé en tant que corps allongé avec deux segments de glissement (14) qui font saillie des côtés opposés du corps et qui sont en prise avec les rainures (4) des unités de guidage (1).

4. Support pour un appareil optique avec deux dispositifs selon l'une des revendications 1 à 3, également **caractérisé en ce que** les dispositifs sont agencés de telle manière que les axes de pivotement se croisent.

5. Support pour un cadre d'objectif d'un appareil photographique ou pour un cadre d'image d'un appareil photographique, comprenant un porte-objet (41) pour le cadre d'objectif ou le cadre d'image, un mécanisme (27) pour faire pivoter le cadre d'objectif ou le cadre d'image autour d'un axe vertical (22) et un dispositif selon l'une des revendications 1 à 3, également **caractérisé en ce que** le dispositif est situé au-dessus du mécanisme (27) pour l'axe de pivotement vertical, afin de faire pivoter le cadre d'objectif ou le cadre d'image autour d'un axe horizontal (23).

6. Support selon la revendication 5, également **caractérisé en ce que** le dispositif pour l'axe de pivotement horizontal (23) est logé au moins en partie dans le porte-objet (41) pour le cadre d'objectif ou le cadre d'image.

7. Support selon la revendication 5, également **caractérisé en ce que** le porte-objet (41) est muni d'une partie de base (42) et de deux branches (43) destinées à recevoir le cadre d'objectif ou le cadre d'image de façon à pouvoir le régler, ainsi que de moyens (45) pour fixer le cadre d'objectif ou le cadre d'image.

8. Support selon la revendication 5, également **caractérisé en ce que** le support (41) présente un évidement (46) dont la ligne médiane est en intersection avec l'axe vertical (22) et s'étend transversalement par rapport à l'axe horizontal (23), et **en ce que** l'unité de guidage (1) ou l'élément pivotant (2) sont logés dans l'évidement.

9. Appareil photographique spécialisé muni d'un support selon l'une des revendications 5 à 8.
